# EUROPÄISCHE PATENTSCHRIFT

(11) **EP 0 641 519 B1**
(45) Veröffentlichungstag und Bekanntmachung des Hinweises auf die Patenterteilung: **02.06.1999**
(21) Anmeldenummer: 94111386.2
(22) Anmeldetag: 21.07.1994
(51) Int. Cl.: A22C 25/17

(54) **Verfahren zum Abtrennen einer Oberflächenschicht und Vorrichtung zur Durchführung des Verfahrens**
Method and device for removing a superficial layer
Procédé et dispositif pour l'enlèvement d'une couche superficielle

(30) Priorität: 01.09.1993 DE 4329380
(43) Veröffentlichungstag der Anmeldung: 08.03.1995
(73) Patentinhaber: NORDISCHER MASCHINENBAU RUD. BAADER GMBH + CO KG, 23560 Lübeck (DE)
(72) Erfinder: Bargelé, Norbert, Dr.-Ing., D-23617 Stockelsdorf (DE); Buddruss, Rüdiger, Dr.-Ing., D-23617 Stockelsdorf (DE); Lorenzen, Thorsten, D-23730 Klein-Schlamin (DE)
(74) Vertreter: Schaller, Hans-Jörg

(56) Entgegenhaltungen:
- FR-A- 1 345 554
- FR-A- 2 571 935
- GB-A- 1 357 371
- US-A- 2 715 427
- US-A- 2 988 124
- US-A- 3 659 639
- US-A- 3 742 841
- US-A- 4 393 761

## Beschreibung

Die Erfindung betrifft ein Verfahren zum Bearbeiten von Fischfilets, betreffend das Abtrennen einer die Haut einschließenden Oberflächenschicht sowie eine Vorrichtung, umfassend eine Förderwalze mit griffiger Mantelfläche, einen Andrückschuh mit einer der Mantelfläche unter Belassen eines geringen Spaltes gegenüberstehenden Andrückfläche und einer Schneideinrichtung umfassend ein erstes, mit seiner Schneide der Mantelfläche der Förderwalze naheliegendes Messer und ein zweites, mit seiner Schneide der Mantelfläche ferner liegendes Messer.

Aus der US 4 628 806 ist eine Vorrichtung bekannt, die eine Förderwalze aufweist, deren Mantelfläche die Schneiden zweier Messer in unterschiedlichem Abstand gegenüberstehend angeordnet sind. Die Vorrichtung ist weiter mit einem Andrückschuh mit zu der Mantelfläche der Förderwalze beabstandeter Andrückfläche versehen. In den Andrückschuh ist die Schneide des geringer beabstandeten ersten Messers als starrer Bestandteil integriert. Das weiter beabstandete zweite Messer ist ebenfalls in diesem Sinne starr ausgebildet. Vor und oberhalb der Förderwalze befindet sich je ein Förderer zum Zuführen des Bearbeitungsgutes bzw. zur Unterstützung der Förderung desselben. Nach dem Anschnitt des ersten Messers sorgt die Förderwalze im Zusammenwirken mit der Andrückfläche dafür, daß die Schwarte im Fortgang der Abtrennung abgeführt wird.

Diese Vorrichtung ist zum Entschwarten von Speck konzipiert. Dabei fällt dem zweiten Messer die Aufgabe zu, eine Schicht zu entfernen, die die Schwarte mit einer Fettschicht umfaßt, während das erste Messer vorgesehen ist, um die Schwarte von der Fettschicht zu trennen. Der verfahrensmäßige Ablauf dieses Vorgangs ist dabei so, daß zunächst das zweite Messer und danach das erste Messer in Eingriff kommt.

Eine derartige Vorrichtung ist zur entsprechenden Bearbeitung von Fischfilets nicht geeignet. Verantwortlich dafür ist insbesondere mangelnde Formstabilität und weiche Konsistenz dieses Produktes. Diese Eigenschaften machen erforderlich, daß zumindest der in dem Muskelfleisch geführte innere Trennschnitt durch ziehende Bearbeitung, beispielsweise durch ein oszillierend angetriebenes Messer erfolgt. Ein solches Messer ist beispielsweise in der DE 37 00 324 gezeigt.

Beim Einsatz eines derartigen Messers kommt es unumgänglich darauf an, daß das Filet zumindest jeweils in der Bearbeitungszone flach, d. h. ungestaucht und faltenfrei aufliegt, um zu vermeiden, daß die Qualität des Endproduktes mindernde Unregelmäßigkeiten, beispielsweise Hautinseln, auftreten. Dies soll wie ebenfalls aus der DE 37 00 324 ersichtlich ist, durch eine ziehende Förderung erreicht werden, zu welchem Zweck ein Andrückschuh mit Andrückfläche Verwendung findet, die mit der Enthäutewalze einen Förderspalt bildet, durch den hindurch die abgetrennte Oberflächenschicht jeweils nach der Trennung abgezogen werden soll.

Dies funktioniert auch, solange es sich bei der abzutrennenden Oberflächenschicht um die vergleichsweise zähe Haut handelt, die einen entsprechend festen Zugriff in dem besagten Förderspalt ermöglicht. Soll jedoch im Muskelfleisch geschnitten werden, wie es beispielsweise zwecks Abtrennung einer Fett- und/oder dunklen Fleischschicht wünschenswert ist, so versagt dieses Verfahren, weil die weiche Konsistenz einer solchen Oberflächenschicht aufgrund mangelnden Zugriffs keine sichere Förderung ermöglicht.

Der Erfindung liegt die Aufgabe zugrunde, ein Trennverfahren zum Abtrennen einer die Haut mitumfassenden Oberflächenschicht beliebiger Dicke zu verwirklichen.

Diese Aufgabe wird erfindungsgemäß bei einer Vorrichtung der eingangs beschriebenen Art dadruch gelöst, daß das erste Messer als Festmesser und das zweite als oszillierend angetriebenes Messer ausgebildet sind, und die Schneide des äußeren Messers in bezug auf die Schneide des inneren Messers und hinsichtlich der Zuförderrichtung des Fischfilets, der Schneide des inneren Messers gleichgelagert oder nachgelagert ist.

Die damit erzielbaren Vorteile bestehen insbesondere darin, daß einerseits die Haut in bekannter Weise sicher erfaßt und damit eine ziehende, d. h. das Filet streckende Förderung erreicht wird, und daß sich andererseits eine problemlose Trennung einer zweiten Oberflächenschicht durchführen läßt, da die abzutrennenden Fleischteile an der Trennstelle jeweils noch unter dem verfestigenden Einfluß der Haut stehen.

Weitere vorteilhafte Merkmale der erfindungsgemäßen Vorrichtung sind den Unteransprüchen zu entnehmen.

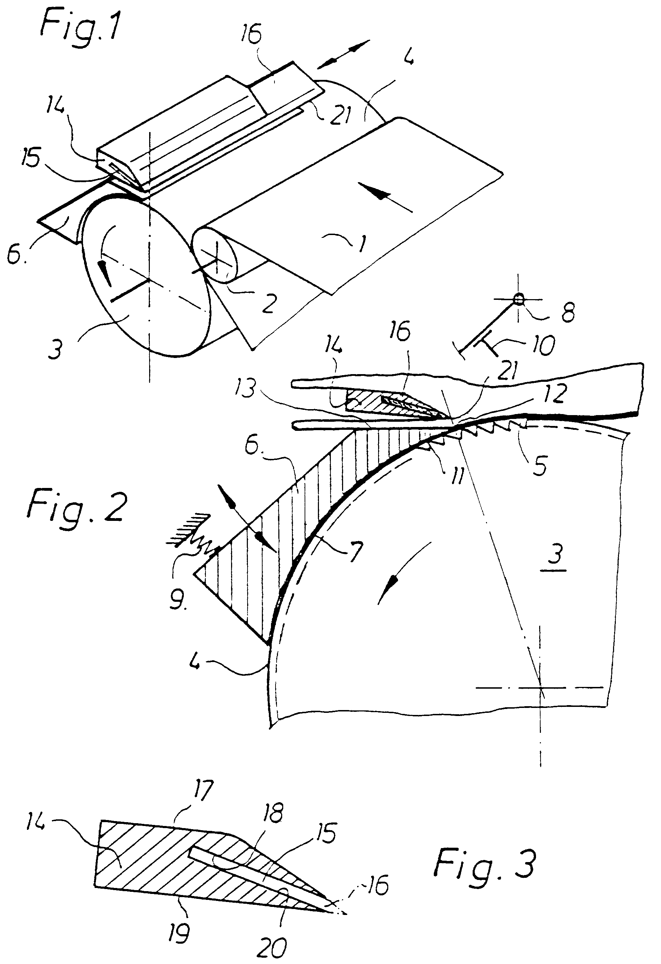

Die Erfindung wird nachstehend anhand eines in der Zeichnung dargestellten Ausführungsbeispiels näher erläutert. Es zeigen
- Fig. 1: eine ausschnittweise Ansicht der erfindungsgemäßen Vorrichtung in perspektivischer Darstellung,
- Fig. 2: einen Teil-Längsschnitt durch die Vorrichtung nach Fig. 1 vergrößert dargestellt.
- Fig. 3: einen Querschnitt durch die Messerführung.

In einem nicht dargestellten Geste einer Enthäutemaschine für Fischfilets sind die ablaufseitige Umlenkwalze 2 eines endlosen Zuführbandes 1 sowie eine Förderwalze 3 gelagert und in geeigneter Weise gleichsinnig umlaufend angetrieben. Die Förderwalze 3 ist an ihrer Mantelfläche 4 in bekannter Weise mit Längsnuten 5 versehen. Der Mantelfläche 4 der Förderwalze 3 ist im Bereich ihrer ablaufenden Seite ein Andrückschuh 6 mit einer Andrückfläche 7 gegenübergestellt, deren Krümmungsradius im wesentlichen dem der Mantelfläche 4 der Förderwalze 3 entspricht. Der sich über die ganze Länge der Förderwalze 3 erstreckende Andrückschuh 6 ist um die Achse 8 gegen die Kraft einer Feder 9 von der Förderwalze 3 weg verdrängbar und mittels eines einstellbaren Anschlages 10 bezüglich der Spaltweite zwischen seiner Andrückfläche 7 und der Mantelfläche 4 in seiner Grundstellung abgestützt. Der Andrückschuh 6 wird nach oben durch eine Rückenfläche 13 begrenzt, welche sich parallel zu der Mantelfläche 4 der Förderwalze 3 erstreckt und mit dem oberen Endbereich der Andrückfläche 7 einen spitzen Winkel bildet, dessen Scheitelkante als Schneide 12 ausgeführt ist, so daß dieser Teil des Andrückschuhs 6als ein erstes Messer 11 ausgebildet ist. Oberhalb der Rückenfläche 13 des Andrückschuhs 6 befindet sich eine Messerführung 14 mit einem Führungsschlitz 15 zur Führung einer Messerklinge 16. Die Messerführung 14 ist an ihrer Oberseite 17 abgefast und bildet mit der den Führungsschlitz 15 nach oben begrenzenden Führungsfläche 18 ein keilförmiges Element. Die Unterseite 19 der Messerführung 14 bildet mit der den Führungsschlitz 15 nach untern begrenzenden Führungsfläche 20 ist ebenfalls ein keilförmiges Element. Dabei schließen die Unterseite 19 und die Rückenfläche 13 des Andrückschuhs 6 einen sich in Drehrichtung der Förderwalze 3 öffnenden spitzen Winkel ein. Die Messerführung 14 ist auf geeignete, nicht dargestellte Weise bezüglich des Abstandes ihrer Unterseite 19 zu der Rückenfläche 13 des Andrückschuhs 6 einstellbar ausgeführt.

Die Messerklinge 16 ist aus Bandstahl gefertigt und in ihrer Breite so dimensioniert, daß ihre Schneide 21 aus dem Führungsschlitz 15 gegen die Förderrichtung der Förderwalze 3 weisend herausragt. Die Messerklinge 16 ist oszillierend angetrieben in einer Weise, die nicht näher dargestellt ist und beispielsweise dem Konzept nach der DE 37 00 324 entsprechen kann.

Die Wirkungsweise der Vorrichtung ist folgende:

Ein zu enthäutendes Fischfilet wird mit der Hautseite aufliegend und dem Schwanzende voraus mittels des Zuführbandes 1 auf die Mantelfläche 4 der umlaufenden Förderwalze 3 gebracht und von dieser weitergefördert. Dabei lagert sich das Schwanzende in den Längsnuten 5 der Mantelfläche 4 ein und gelangt so unter die Schneide 12 des ersten Messers 11 und kurz darauf mit den bereits gelösten Teilen der Haut in den Spalt zwischen der Andrückfläche 7 und der Mantelfläche 4 , was spontan zu einem sicher fördernden Angriff an derjeweils freigeschnittenen Haut führt. Dabei erfährt der Andrückschuh 6 eine Auftriebskraft, welche nach Überwindung der Kraft der Feder 9 bewirkt, daß die Andrückfläche 7 auf der Innenfläche der zähen Haut gleitet und durch Mitnahme der Schneide 12 in einen Abstand zu der Mantelfläche 4 gebracht wird, der jeweils der Stärke der abzutrennenden Haut entspricht.

Unmittelbar mit bzw. nach dem durch die einsetzende Förderung erfolgten Anschnitt erreicht das vorauslaufende Ende des Filets die Schneide 21 der Messerklinge 16 , wodurch eine unter der Haut liegende Materialschicht fortschreitend abgetrennt wird. Der fördernde Angriff erfolgt dabei an der Haut, wobei die Förderkräfte als Zugkraft im Trennbereich der Schneide 12 auf das Filets übertragen wird.

Durch geeignete Ableitungen können die Haut und die Materialschicht getrennt aufgefangen werden.

### Bezugszeichenliste

- 1.: Zuführband
- 2.: Umlenkwalze
- 3.: Förderwalze
- 4.: Mantelfläche
- 5.: Längsnut
- 6.: Andrückschuh
- 7.: Andrückfläche
- 8.: Achse
- 9.: Feder
- 10.: Anschlag
- 11.: erstes Messer
- 12.: Schneide
- 13.: Rückenfläche
- 14.: Messerführung
- 15.: Führungsschlitz
- 16.: Messerklinge (zweites Messer)
- 17.: Oberseite
- 18.: Führungsfläche
- 19.: Unterseite
- 20.: Führungsfläche
- 21.: Schneide

## Patentansprüche

1. Verfahren zum Bearbeiten von Fischfilets, betreffend das Abtrennen einer die Haut einschließenden Oberflächenschicht, **dadurch gekennzeichnet,** daß mit oder unmittelbar vor dem Abtrennen der Oberflächenschicht die Haut für sich abgetrennt wird.

2. Vorrichtung zur Durchführung des Verfahrens nach Anspruch 1, umfassend eine Förderwalze (3) mit griffiger Mantelfläche (4) , einen Andrückschuh (6) mit einer der Mantelfläche (4) unter Belassen eines geringen Spaltes gegenüberstehenden Andrückfläche (7) und einer Schneideinrichtung umfassend ein erstes, mit seiner Schneide (12) der Mantelfläche (4) der Förderwalze (3) naheliegendes Messer (11) und ein zweites, mit seiner Schneide (21) der Mantelfläche (4) ferner liegendes Messer (16) , **dadurch gekennzeichnet,** daß das erste Messer (11) als Festmesser und das zweite (16) als oszillierend angetriebenes Messer ausgebildet sind, und die Schneide (21) des äußeren Messers (16) in bezug auf die Schneide (12) des inneren Messers (11) und hinsichtlich der Zuförderrichtung des Fischfilets, der Schneide (12) des inneren Messers (11) gleichgelagert oder nachgelagert ist.

3. Vorrichtung nach Anspruch 2 , **dadurch gekennzeichnet,** daß die Schneide (12) des ersten Messers (11) als Bestandteil des Andrückschuhs (6) ausgebildet ist, wobei sich die Andrückfläche (7) in Umlaufrichtung der Förderwalze 3) betrachtet unmittelbar hinter der Schneide (12) erstreckt.

4. Vorrichtung nach Anspruch 2 oder 3 , **dadurch gekennzeichnet,** daß das zweite Messer (16) als in einer Messerführung (14) geführte Klinge ausgebildet ist.

5. Vorrichtung nach einem der Ansprüche 2 bis 4 , **dadurch gekennzeichnet,** daß der Andrückschuh (6) mit dem ersten Messer (11) gegen die Kraft einer Feder (9) im Sinne einer Vergrößerung des Abstandes seiner Andrückfläche (7) verdrängbar und das zweite Messer (16) bezüglich des Abstandes seiner Schneide (21) von der Mantelfläche (4) der Förderwalze (3) einstellbar ist.

## Claims

1. Method of processing fish fillets with respect to the separating off of a surface layer including the skin, characterised in that the skin as such is separated off with or directly before the separating off of the surface layer.

2. Device for carrying out the method according to claim 1, comprising a conveying roller (3) with gripping circumferential surface (4), a presser shoe (6) with a presser surface (7) disposed opposite the circumferential surface (4) whilst leaving a small gap, and a cutting device comprising a first knife (11), which is disposed adjacent the circumferential surface (4) of the conveying roller (3) by its cutting edge (12), and a second knife (16), which is disposed further from the circumferential surface (4) by its cutting edge (21), characterised in that the first knife (14) is constructed as a fixed knife and the second knife (16) as an oscillatingly driven knife, and the cutting edge (21) of the outer knife (16) is mounted, with respect to the cutting edge (12) of the inner knife (11) and to the conveying direction of the fish fillet, equally with or behind the cutting edge (12) of the inner knife (11).

3. Device according to claim 2, characterised in that the cutting edge (12) of the first knife (11) is constructed as a component of the presser shoe (6), wherein the presser surface (7) extends, considered in the rotational direction of the conveying roller (3), directly behind the cutting edge (12).

4. Device according to claim 2 or 3, characterised in that the second knife (16) is constructed as a blade guided in a knife guide (14).

5. Device according to one of claims 2 to 4, characterised in that the presser shoe (6) together with the first knife (11) can be urged against the force of a spring (9) in the sense of an enlargement of the spacing of its presser surface (7) and the second knife (16) is settable with respect to the spacing of its cutting edge (21) from the circumferential surface (4) of the conveying roller (3).

## Revendications

1. Procédé pour traiter des filets de poisson, pour la séparation d'une couche superficielle incluant la peau, caractérisé en ce qu'on sépare la peau séparément soit en même temps soit juste avant la séparation de la couche superficielle.

2. Dispositif pour la mise en oeuvre du procédé selon la revendication 1, comprenant un cylindre d'entraînement (3) comportant une surface enveloppe accrochante (4), un sabot de serrage (6) comportant une surface de serrage (7) située en vis-à-vis de la surface enveloppe (4) tout en laissant subsister une faible fente, et un dispositif de coupe comprenant un premier couteau (11) dont le tranchant (12) est proche de la surface enveloppe du cylindre d'entraînement (3) et un second couteau (16) dont le tranchant (21) est plus éloigné de la surface enveloppe (4), caractérisé en ce que le premier couteau (11) est agencé en tant que couteau fixe et le second couteau (16) est agencé en tant que couteau entraîné de façon oscillante, et que le tranchant (21) du couteau extérieur (16) est placé, par rapport au tranchant (12) du couteau intérieur (11) et selon la direction de convoyage du filet de poisson, dans la même position que le tranchant (12) du couteau intérieur (11) ou dans une position aval.

3. Dispositif selon la revendication 2, caractérisé en ce que le tranchant (12) du premier couteau (11) fait partie du sabot de serrage (6), la surface de serrage (7) s'étendant directement en arrière du tranchant (12), dans la direction circonférentielle du cylindre d'entraînement (3).

4. Dispositif selon la revendication 2 ou 3, caractérisé en ce que le second couteau (16) est agencé sous la forme d'une lame guidée dans un guide (14) de couteau.

5. Dispositif selon l'une des revendications 2 à 4, caractérisé en ce que le sabot de serrage (6) peut être repoussé au moyen du premier couteau (11), à l'encontre de la force d'un ressort (9), dans le sens d'un accroissement de la distance de sa surface de serrage (7) et que la distance du tranchant (21) du second couteau (16) par rapport à la surface enveloppe (4) du cylindre d'entraînement (3) est réglable.
